(19) Europäisches Patentamt
European Patent Office
Office européen des brevets

(11) **EP 3 887 083 B1**

(12) **EUROPEAN PATENT SPECIFICATION**

(45) Date of publication and mention
of the grant of the patent:
**31.07.2024 Bulletin 2024/31**

(21) Application number: **19831895.8**

(22) Date of filing: **29.11.2019**

(51) International Patent Classification (IPC):
**B23F 19/00** (2006.01)      **B23F 5/04** (2006.01)
**B23F 23/00** (2006.01)

(52) Cooperative Patent Classification (CPC):
**B23F 19/002; B23F 5/04;** B23F 23/006

(86) International application number:
**PCT/IB2019/060331**

(87) International publication number:
**WO 2020/110084 (04.06.2020 Gazette 2020/23)**

(54) **METHOD AND MACHINE FOR REALIZING THE LEAD CROWNING OF THE FLANKS OF A GEAR**

VERFAHREN UND MASCHINE ZUR REALISIERUNG DER LEITWÖLBUNG DER FLANKEN EINES ZAHNRADS

PROCÉDÉ ET MACHINE POUR RÉALISER LA MISE EN COURONNE DES FLANCS D'UN ENGRENAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2018 IT 201800010689**

(43) Date of publication of application:
**06.10.2021 Bulletin 2021/40**

(73) Proprietor: **EMAG SU S.r.l.**
**20098 San Giuliano Milanese (MI) (IT)**

(72) Inventors:
• **LANDI, Enrico**
**40010 Bentivoglio (BO) (IT)**

• **PEIFFER, Klaus**
**8304 Wallisellen (CH)**

(74) Representative: **Zermani Biondi Orsi, Umberto**
**Bugnion S.p.A.**
**Viale Lancetti, 17**
**20158 Milano (IT)**

(56) References cited:
CH-A- 440 915          DE-A1- 4 231 021
GB-A- 825 648          US-A- 4 545 708
US-A- 4 850 155        US-A- 5 765 974
US-A1- 2013 280 990    US-A1- 2016 214 193

**Description**

TECHNICAL FIELD

This patent application relates to a method and a machine for realizing the lead crowning of the flanks of a gear.

BACKGROUND ART

Processes are known, which use generating cutting tools for the cutting and the finishing of gears, such as, for example, hobs, worm grinding wheels, etc. These types of tools can also be used for realizing the lead crowning of the flanks of a gear.

The lead crowning of the flanks of a gear changes the ideal profile of a gear, so as to create a contact area in a central zone of each flank of the gear. In particular, the lead crowning of the flanks of a gear allows for a compensation of possible misalignments in a gear pair and for a correct operation of the gear itself. In particular, the lead crowning allows the contact to be distributed and the interference with the tip corners of the other gear of a gear pair to be avoided, transmission errors to be reduced, impacts during the operation to be reduced, the noise emission of a gear pair to be reduced, the fatigue life to be increased.

It is known to manufacture a gear by means of generating cutting tools, which can be used to either cut a cylindrical body made of metal or to finish a gear. Generating cutting tools allow for a continuous machining of all the teeth of a gear and, therefore, allow the machining processes to be sped up.

In order to obtain the lead crowning $c\beta$ of the flank, it is known to translate a generating cutting tool relative to the rotation axis of the gear; in particular, the axial movement Z is the translation along the rotation axis of the gear, whereas the radial movement cx is the radial translation relative to the rotation axis of the gear.

During a known method for realizing the lead crowning, the total axial movement is mainly determined by the width of the face of gear plus an extra-stroke on both sides of the gear. The extra-stroke, besides being a function of other minor factors, mainly is a function of the extent of the lead crowning to be manufactured and of the diameter of the cutting tool.

Therefore, as the width of the gear decreases, the incidence of the diameter of the cutting tool upon the manufacturing times increases. In case of processing of a thin gear, namely a gear with a width smaller than 1 cm, the total axial movement and the manufacturing times are mainly due to the carrying out of the extra-stroke. In other words, in case of lead crowning of a thin gear, the total axial movement is mainly determined by the extra-stroke, instead of being determined by the width of the face of the gear.

Therefore, in order to reduce the times needed for the production of the lead crowning, the manufacturers of thin gears are constantly looking for generating cutting tools with diameters that are as small as possible. However, this solution is not particularly advantageous as, besides not allowing for a significant reduction in processing times, it also has other disadvantages, such as, for example, a shorter life of the cutting tools with a smaller diameter.

Some other prior art solutions are known from documents US2013/280990, CH440915 and DE4231021. In particular, US2013/280990 shows a method according to the preamble of claim 1 and a machine according to the preamble of claim 8.

DISCLOSURE OF INVENTION

The object of the invention is to provide a method for realizing the lead crowning of an axial-symmetrical body, in particular of a gear, which is quick to be implemented.

The object of the invention is to provide a method for realizing the lead crowning of an axial-symmetrical body, in particular of a gear, which allows manufacturers to overcome the drawbacks discussed above.

The object of the invention is to provide a machine for implementing the method for realizing the lead crowning according to the invention.

According to the invention, there is provided a method for realizing the lead crowning of an axial-symmetrical body as claimed in the appended claims.

According to the invention, there is provided a machine for realizing the lead crowning of an axial-symmetrical body as claimed in the appended claims.

BRIEF DESCRIPTION OF THE DRAWINGS

The invention will now be described with reference to the accompanying drawings, wherein:

-    figure 1 is a schematic representation of a cylindrical generating cutting tool, which meshes with a gear;
-    figure 2 is a schematic representation of a tooth of a gear having a lead crowning of the flank;
-    figure 3 is a diagram of the path of a generating cutting tool during the manufacturing of the lead crowning according to the state of the art;
-    figure 4 is similar to figure 3 and shows the path of a generating cutting tool during the manufacturing of the lead crowning, according to the state of the art, of a thin gear;
-    figure 5 is similar to figure 4 and shows the path of a cutting tool with a small diameter during the manufacturing of the lead crowning, according to the state of the art, of a thin gear;
-    figure 6 is a graph establishing a relation between the total path of the cutting tool and the extent of the lead crowning as well as the width of the gear, for a method according to the state of the art;
-    figure 7 is view VII, in a schematic manner, of figure 4 of a cutting tool meshing with a gear according to the state of the art;

- figure 8 is a cross section according to line VIII-VIII of figure 7;
- figure 9A schematically shows, on a larger scale, the contact between a cutting tool and one flank of a gear during a known method;
- figure 9B schematically shows, on a larger scale, the contact between a cutting tool and one flank of a gear according to the invention; and
- figure 10 is similar to figure 4 and shows the path of a cutting tool during the manufacturing of the lead crowning, according to the invention, of a thin gear.

BEST MODE FOR CARRYING OUT THE INVENTION

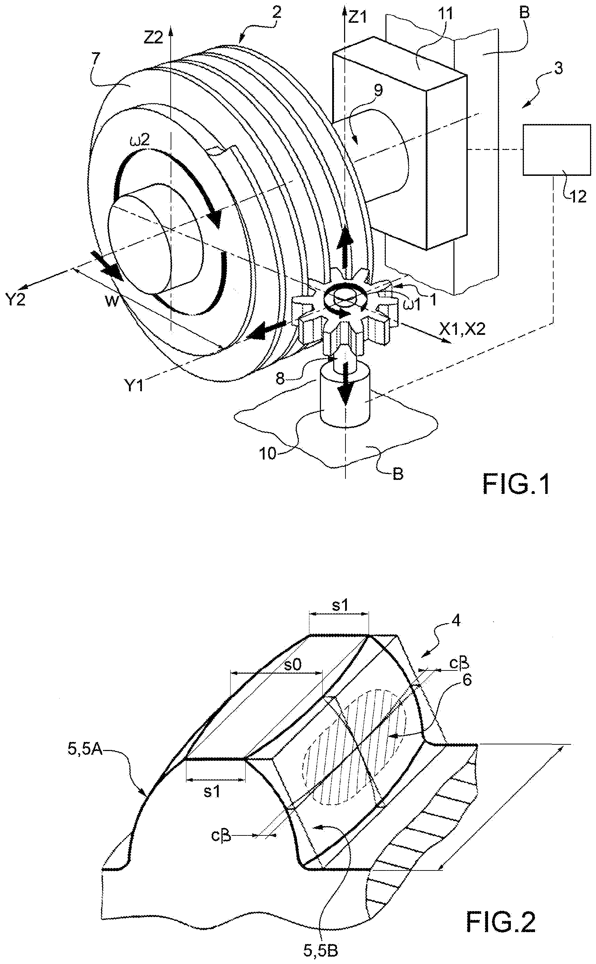

In figure 1, number 1 schematically indicates a gear 1 having a rotation axis Z1 and meshing with a cutting tool 2 having a longitudinal rotation axis Y2, on board an automatic machine 3 (which is schematically shown).

Figure 1 shows a gear 1 already provided with teeth. Advantageously, the gear 1 was manufactured on board the machine 3 (or on an external machine) starting from an axial-symmetrical cylindrical body, which was subjected to prior machining operations, such as cutting and/or shaving and/or finishing, etc.

The method according to the invention can be used for carrying out the last machining operation to which the gear 1 is subjected on board a known automatic machine.

Figure 2 shows, by way of example and in detail, a tooth 4 of a gear 1 having a lead crowning $c_\beta$ on both opposite flanks 5, which hereinafter are identified as left flank 5A and right flank 5B with a lead crowning.

As described more in detail below, the method according to the invention can be carried out on one or on both the rows A and B of flanks 5 of the gear 1. Hereinafter, by row (A or B) of flanks 5 of a gear 1 we mean all the flanks 5 of a gear 1 with a same orientation, namely all the right flanks 5A or all the left flanks 5B.

In the example shown in figure 2, the tooth 4 has a thickness s0 in the area of the middle line, namely in a central zone, of the flanks 5 and a thickness s1 in the area of the longitudinal ends of the flanks 5. The thickness s1 is greater than the thickness s0. In this way, a central contact area 6 is obtained, which is configured so as to be placed, in use, in contact with another gear 1. The lead crowning $c_\beta$ of the teeth 4 according to figure 2 allows for a compensation of possible installation/misalignment errors and ensures the correct operation of the gear 1.

The cutting tool 2 is a generating cutting tool with defined or undefined cutting edges. The cutting tool 2 is cylindrical.

The cutting tool 2 can be a roughing tool or a finishing tool. For example, the cutting tool 2 can be a hob or a grinding wheel.

In other words, the cutting tool 2 can be used to obtain, at first, a toothing and, subsequently, a lead crowning $c_\beta$ of an axial-symmetrical body still without teeth and/or can be capable of roughing or finishing a gear 1. In other words, the cutting tool 2 can be a hob, which generates, through generation, a gear 1 and subsequently also creates the lead crowning $c_\beta$.

According to the example shown in figure 1, the cutting tool 2 is a grinding wheel. The cutting tool 2 has a helical, single-start or multi-start cutting edge 7.

As described more in detail below, the number of revolutions per minute, namely the speed of rotation of the gear 1 is adjusted depending on the speed of rotation of the cutting tool 2, on the number of starts of the cutting tool 2 and on the number of teeth 4 of the gear 1, so as to ensure a correct meshing between the two of them during the manufacturing of the lead crowning $c_\beta$. Advantageously, a generating cutting tool 2 allows for a high-speed manufacturing of the lead crowning $c_\beta$ of a gear 1. Therefore, the use of a generating cutting tool 2 leads to high-productivity processes.

According to the schematic representation of figure 1, the machine 3 comprises: a piece-holder mandrel 8, on which, in use, a gear 1 is fitted; a tool-holder mandrel 9, on which, in use, a cutting tool 2 is fitted; an actuator 10 for the piece-holder mandrel 8; an actuator 11 for the tool-holder mandrel 9; and a control unit 12. The control unit 12 is configured to adjust the operation of the actuators 10 and 11.

The actuator 10 is configured to rotate the piece-holder mandrel 8 around the rotation axis Z1 and/or around a swivel axis X1. The swivel axis X1 is substantially perpendicular to the rotation axis Z1 and perpendicular to the plane defined by the axes Z1-Y1, wherein Y1 is an axis substantially parallel to the longitudinal axis Y2 of the cutting tool 2. The actuator 10 can further cause one or more of the following additional movements of the piece-holder spindle 8: the rotation around the axis Y1; the translation along one or more of the axes X1, Y1 and Z1.

The actuator 11 is configured to rotate the tool-holder mandrel 9 around the longitudinal axis Y2 and/or around a swivel axis X2. The swivel axis X2 is substantially perpendicular to the longitudinal axis Y2 and perpendicular to the plane defined by the axes Y2-Z2, wherein the axis Z2 is parallel to the rotation axis Z1 of the gear 1. The actuator 11 can further cause one or more of the following additional movements of the tool-holder spindle 9: the translation along one or more of the axes X2, Y2, Z2.

In the example shown in figure 1, the swivel axes X1 and X2 coincide.

According to the state of the art, if the cutting tool 2 is translated so as to have the cutting edge 7 slide on the opposite flanks 5 of the gear 1 and longitudinally to the rotation axis Z1 of the gear 1, keeping the radial distance w between the cutting tool 2 and the gear 1 unchanged, a processing pass is carried out without manufacturing the lead crowning $c_\beta$. In this case, the cutting tool 2 makes an axial movement with each pass, which corresponds to the width l of the gear 1.

According to the prior art, in order to manufacture the lead crowning $c\beta$ of the flanks 5 of the teeth 4, the cutting tool 2 needs to be translated along the swivel axis X2, namely radially to the rotation axis Z1 of the gear 1, so as to continuously change the radial distance w calculated along the swivel axis X1 or X2.

According to the example shown in the figures, in which the cutting tool 2 is a grinding wheel, the value of the radial movement cx of the cutting tool 2 is given by the following equation:

$$cx = \frac{c\beta}{\sin \alpha}$$

Wherein:

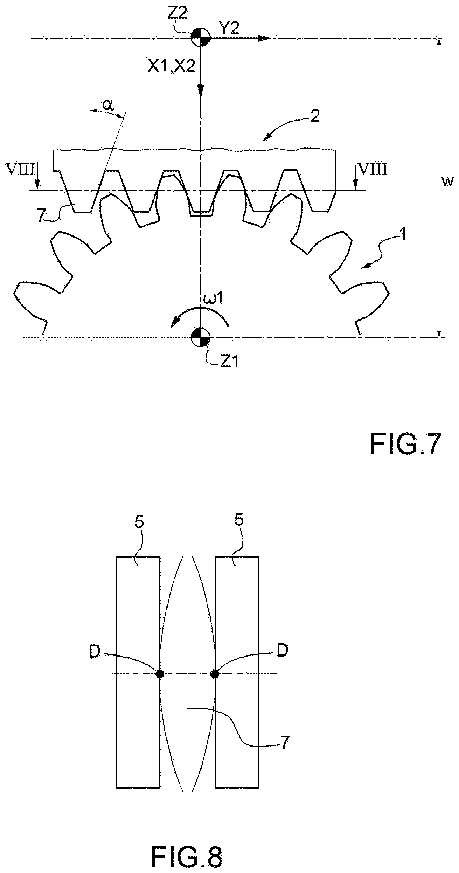

cx is the value of the radial movement of the cutting tool along the axis X1 or X2;
$c\beta$ is the value of the lead crowning of the flank;
$\alpha$ is the pressure angle of the cutting tool 2 as shown in figure 7.

As an indication, the mean value of $c\beta$ generally ranges from approximately 2 to approximately 50 $\mu$m.

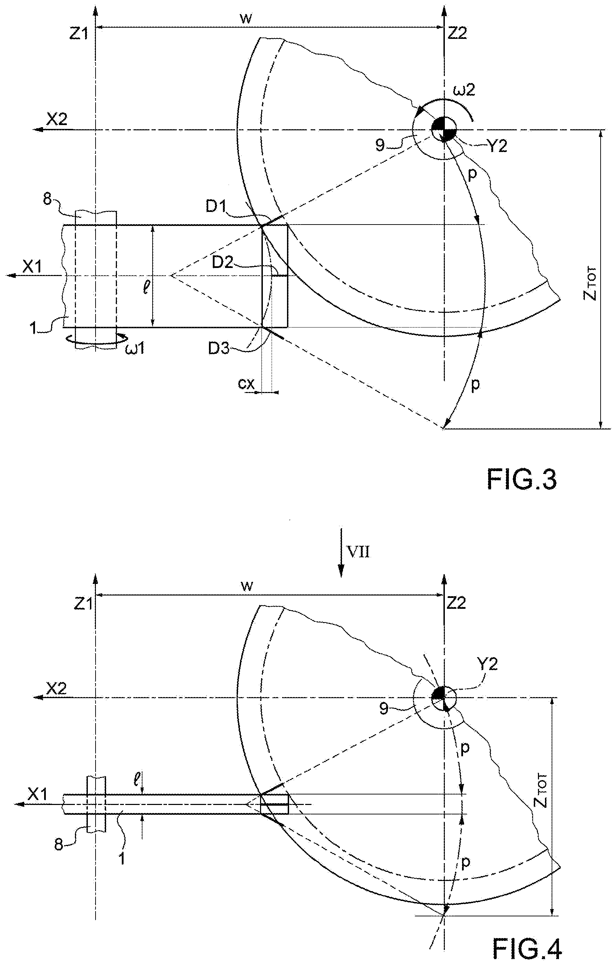

Figure 3 schematically shows the projection on plane X1-Z1 of the relative movement between the cutting tool 2 and the gear 1, during a method according to the prior art. In particular, in figures 3 to 5, p indicates the path of the head of the cutting edge 7 in the compartment between the adjacent teeth 4, On the other hand, D1-D3 indicate the contact lines, namely the lines of interaction between the cutting tool 2 and the gear 1.

According to figure 3, a known method requires the longitudinal axis Y2 of the cutting tool 2 to also cover an extra-stroke p, namely the path of the tool-holder mandrel 9 needs to extend beyond the width l of the gear 1.

During a known method of the type described above, the movement of the cutting tool 2 along the axis Z2 is the operation that requires the greatest amount of time. Indeed, in order to manufacture the lead crowning $c\beta$, a cutting tool 2 not only has to make a movement corresponding to the width l of the teeth 4, but it also needs to cover the extra-stroke.

The extent of the extra-stoke p mainly depends on the type of lead crowning $c\beta$ to be obtained, the stock of material to be removed, the helix angle of the gear 1.

According to the prior art, the total axial movement Ztot of the cutting tool 2 is substantially given by the following equation:

$$\texttt{Ztot= Zb +Zq+ 2x(Z}\beta\texttt{+Zcx)}$$

Wherein:

Zb is the width l of the tooth 4;
Zq is a parameter which is a function of the stock of material on the flank;
$Z\beta$ is a parameter which is a function of the helix angle of the gear 1; and
Zcx is a parameter which is a function of the radial movement cx to be obtained.

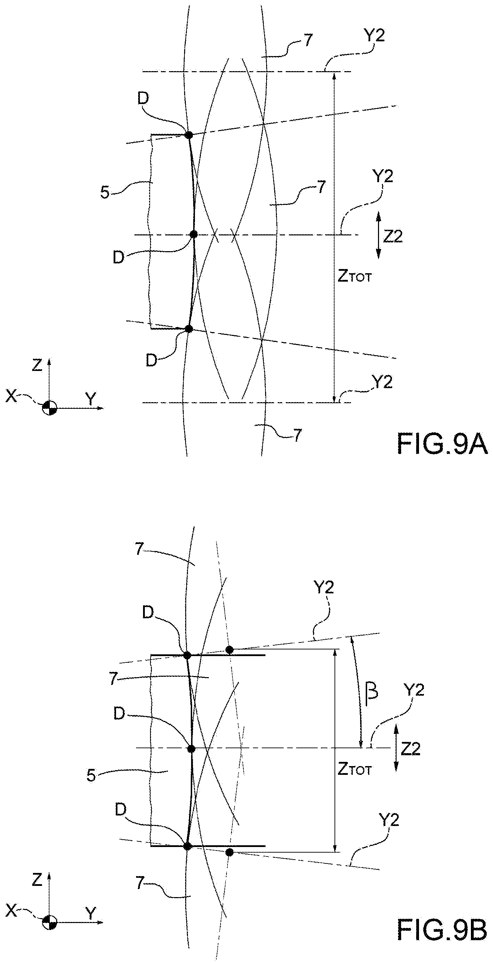

According to figure 9A, the known method is carried out by translating the cutting tool 2 along the axis Z2 in combination with a relative movement between the cutting tool 2 and the gear 1 along the axis Y2, so as to increase the penetration between the cutting edge 7 and the flank 5 of the tooth 4.

Advantageously, the relative movement between the cutting tool 2 and the gear 1 is obtained by changing, namely by adjusting, the speed of rotation $\omega$1 of the gear 1 relative to the speed of rotation w2 of the cutting tool 2, so as to obtain local contact areas.

The example of figure 9A shows the cutting edge 7 in three different positions relative to the flank 5. According to this embodiment, the contact line D, besides extending on the flank 5 of the tooth, also extends on the profile of the cutting edge 7. In other words, the contact line D can be decentralized, namely not aligned with the rotation axis Y2 of the cutting tool 2.

According to figure 9A, the lead crowning of the flank of the gear can be carried out keeping a fixed radial distance w (figure 7) and only on one flank of the gear (5A and 5B) at a time.

Figure 3 shows the total axial movement Ztot needed, during a method according to the prior art, relative to the width l of a gear 1.

Figure 4 similarly shows the relation between the total axial movement Ztot and the width l of a thin gear 1 in a method according to the prior art.

By "thin gear" we mean a gear 1 having a reduced width 1. The width l is the extension of the tooth 4 along its rotation axis. For example, a thin gear 1 has a width l below 1 cm. In particular, the thin gear 1 has a width l which is equal to or smaller than 1 cm, preferably the thin gear 1 has a width l which is equal to or smaller than 5 mm.

According to figure 4, despite the gear 1 being thin, the tool-holder mandrel 9 must make a movement extending way beyond the width l of the thin gear 1. In other words, the extra-stroke p exceeds the width l of the gear 1.

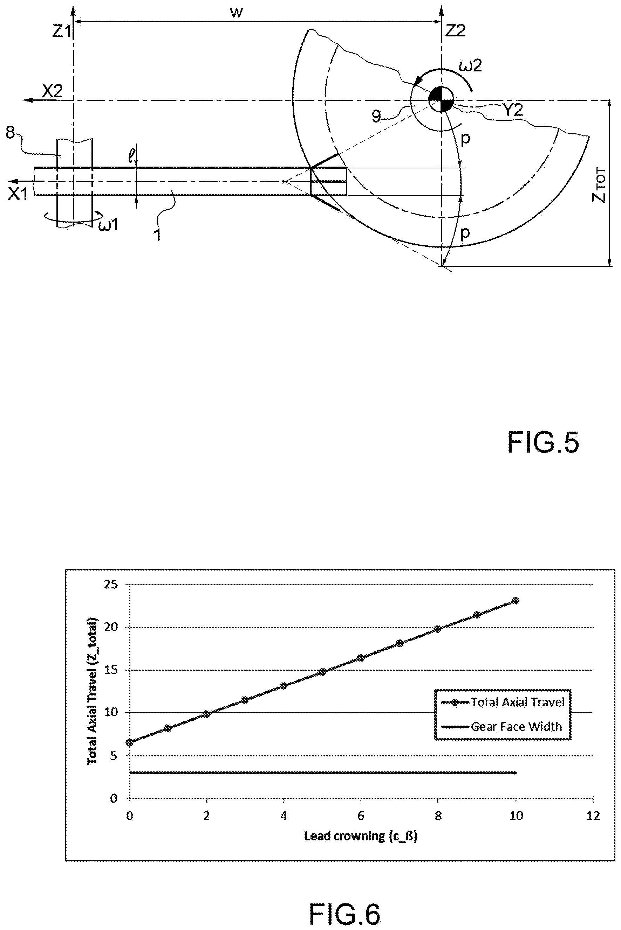

Similarly, even though a cutting tool 2 with a small diameter is used, like the one shown in figure 5, the path Ztot significantly exceeds the width l of the gear 1. Furthermore, a cutting tool 2 with a small diameter is affected by the drawback of having a shorter life.

Figure 6 shows, by way of example, the total axial movement Ztot upon variation of the extent of the lead crowning $c\beta$ to be obtained for a gear 1 with a width l of 3 mm. Based on this diagram, you can see how the total axial movement Ztot can be up to four times greater than the width l of the gear 1. In other words, the introduction of the manufacturing of the lead crowning $c\beta$ in a production process leads, according to the prior art, to a 75% decrease in productivity.

In order to the improve the productivity of the manufacturing of the lead crowning $c\beta$, the manufacturers of gears 4 try and reduce the extra-stroke p as much as possible.

Advantageously, the method for the realization of the lead crowing according to the invention allows for a significant increase in productivity when processing thin gears, as explained more in detail below.

According to the invention, in use, the generating cutting tool 2 approaches and is coupled to the gear 1.

In case machining operations are carried out prior to the manufacturing of the lead crowning, the cutting tool 2 itself or other suitable cutting tools carry out the preceding machining operations. For example, if the machining operations on board the machine 3 start from an axial-symmetrical body without teeth 4 (namely, a metal material disc which has to be provided with teeth), a cutting tool 2 is fitted on the tool-holder mandrel 9 and carries out the toothing operation.

Once a gear 1 is obtained, namely once the teeth 4 have been created on the axial-symmetrical body, if the piece machining phases so require, the generating cutting tool 2, which has already been used for the preceding machining operations, can also manufacture the lead crowning $c\beta$. Alternatively, if a different type of tool was used for the previous machining operations, a tool change can be carried out in the machine 3 and another generating cutting tool 2 can be installed.

According to the invention, in order to obtain the lead crowning $c\beta$, the generating cutting tool 2 is caused to mesh with the gear 1. In particular, the control unit 12 adjusts the number of revolutions per minute, namely the speeds of rotation w1 and w2 of the piece-holder mandrel 8 and of the tool-holder mandrel 9, respectively, depending on the number of starts of the cutting tool 2 and on the number of teeth 4 of the gear 1, so as to ensure a correct meshing thereof.

In particular, the control unit 12 is configured to adjust the actuator 10 of the piece-holder mandrel 8 so as to obtain the rotation around the axis Z1 and/or around the swivel axis X1. If necessary, the actuator 10 can also ensure, in a known manner (since it is installed on a structure B of the machine 3 which is schematically shown in figure 1), further degrees of freedom of the gear 1, such as, for example, the translation along the axes Z, Y1, X1 and/or the rotation around the axis Y1.

In particular, the control unit 12 is configured to adjust the actuator 11 of the tool-holder mandrel 9 so as to obtain the translation of the cutting tool 2 along the axis Y2, Z2 and the rotation of the cutting tool 2 around the axis Y2 and/or around the swivel axis X2. If necessary, the actuator 10 can also ensure, in a known manner (since it is installed on a structure B of the machine 3 which is schematically shown in figure 1), further degrees of freedom of the cutting tool 2, such as, for example, the translation along the axis X1 or the rotation around the axis Z2.

According to what is schematically shown in figure 7, the radial distance w remains unchanged during the manufacturing of the lead crowning $c\beta$.

By radial distance w we mean the distance, calculated along the swivel axis X1 or X2, between the axes Y1 and Y2 of the gear 1 and of the cutting tool 2, respectively.

According to the invention, the lead crowning $c\beta$ of the gear 1 is manufactured by means of the overlap of a relative swivel between the cutting tool 2 and the gear 1. In combination with said relative swivel there is also a relative translation between the cutting tool 2 and the gear 1 along the rotation axis Z1, as explained more in detail below.

The relative movement of the contact line D between the cutting tool 2 and the flank 5 of the gear 1 has an effect that is substantially equivalent to the covering of the extra-stroke p according to the known method. In other words, the method according to the invention allows manufacturers to obtain, on the flank of the gear 1, the same lead crowning $c\beta$ that is obtained with a traditional method.

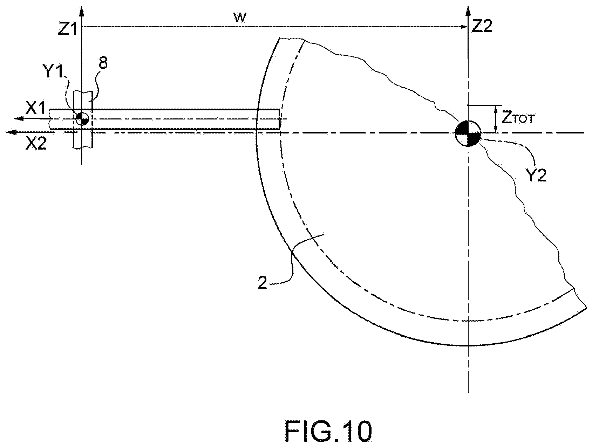

Figure 9B schematically shows the mutual movement between the cutting tool 2 and the gear 1, according to the method of the invention. Furthermore, figure 10 schematically shows the total axial movement Ztot of a cutting tool 2 during the manufacturing of the lead crowning $c\beta$ of a thin gear 1, according to the method of the invention.

According to figure 9B, the cutting tool 2 is swivelled by a swivel angle $\beta$ around the swivel axis X2. In this way, the contact line D between the cutting tool 2 and the gear 1 can constantly remain aligned with the rotation axis Y2 of the cutting tool 2. Furthermore, the extra-stroke p can significantly be reduced, so that the total stroke Ztot is substantially equal to the width l of the gear 1.

In particular, by solely applying the swivel angle $\beta$ around the swivel axis X2 and the translation along the axis Z, a default lead crowning $c\beta$ is obtained, which is substantially equal to the equivalent radius, namely a parameter linked to the geometry of the cutting edge 7 of the cutting tool 2.

In case a different lead crowning $c\beta$ has to be obtained, an additional movement, which is described in figure 9A, can be added, said additional movement being the result of: a variation of the relative speed between the speeds of rotation w1 and w2 of the gear 1 and of the cutting tool 2, respectively; and/or the relative rotation between the cutting tool 2 and the gear 1 along the axis Y2.

The method according to the invention has the advantage of significantly reducing the stroke of the cutting tool 2.

Advantageously, the radial distance w between the cutting tool 2 and the gear 1 remains constant, namely unchanged.

Alternatively, the radial distance w between the cutting tool 2 and the gear 1 can be changed, substantially combining a method for the realization of the lead crowning according to the invention with a traditional method. Obviously, in this case, the variation of the radial distance w is smaller than the radial movement cx needed for manufacturing the lead crowning cβ according to a traditional method.

During the manufacturing of the lead crowning cβ according to the invention, the cutting tool 2 comes into contact with one single flank 5 at a time. In other words, the cutting tool 2 does not simultaneously come into contact with the flanks 5 of the gear 1 arranged side by side, contrary to what happens in known methods. Therefore, the cutting tool 2, in order to be able to processes both flanks 5 of a gear 1, creates the lead crowning cβ of a first row of flanks 5 and subsequently of the other row of flanks 5 (namely, the right flanks 5 at first and then the left flanks 5 or vice versa).

However, since the cutting tool 2, during the manufacturing of the lead crowning cβ according to the invention, is not translated along the axis X2 and follows a path along the axis Z which is extremely small and substantially corresponds to the width l of the gear 1, the times needed to manufacture the lead crowning cβ on a row of flanks 5 of a gear 1 are reduced by approximately 75% in case of a thin gear. Therefore, the method according to the invention allows for a reduction of the processing times of the flanks 5 of gears 1 to such a great extent that it still is more convenient, in terms of productivity, despite the fact that the method must be repeated for the two rows of flanks 5A and 5B of a gear 1.

In other words, if a gear requires, with the traditional method, an axial extra-stroke Zcx which is greater than half the Zb, then the method according to the invention becomes advantageous.

As already mentioned above, the method according to invention and of the type described above can be combined with other types of preceding machining operations. Therefore, for example in a finishing method, a gear 1 can be subjected to standard finishing processes and undergo, as final machining, a lead crowning cβ according to the invention, even on one single row of flanks 5 of the gear 1. Indeed, some production processes can require the lead crowning cβ of one single side of flanks 5 of the gear 1 instead of both sides of the flanks.

Advantageously, the productivity of the method according to the invention is independent of the type of lead crowning to be manufactured (namely, parameter cβ) and of the diameter of the cutting tool 2. Therefore, the method according to the invention can advantageously be applied in the processing of thin gears 1.

**Claims**

1. Method for the lead crowning of the flanks (5A: 5B) of a gear (1) having a rotation axis (Z1); the method being realized by means of a generating cutting tool (2) having a rotation axis (Y2); the method comprising the steps of meshing said gear (1) with the generating cutting tool (2) and of rotating synchronously the cutting tool (2) and the gear (1), wherein the cutting tool (2) and the gear (1) swivel one in respect to the another one around a swivel axis (X1; X2) perpendicular both to the rotation axis (Y2) of the cutting tool (2) and to the rotation axis (Z1) of the gear (1) to vary the position of the contact line (D) **characterized in that** the cutting tool (2) is rotated about the swivel axis (X2) and the gear (1) is fixed in respect to said swivel axis (X2) or, alternatively, the gear (1) is rotated about the swivel axis (X1) and the cutting tool (2) is fixed in respect of said swivel axis (X1); wherein the variation of the swivel angle (β), namely the rotation of the cutting tool (2) or the rotation of the gear (1) about the swivel axis (X2), is continuous.

2. Method according to claim 1, wherein the cutting tool (2) and the gear (1) are translated one in respect to the another along said rotation axis (Y2) of the cutting tool (2).

3. Method according to claim 1 or 2, wherein the rotation speed (ω1) of the gear (1) about the rotation axis (Z1) and the rotation speed (w2) of the cutting tool (2) about of its rotation axis (Y2) are regulated to vary the position of the contact line (D) between a row of flanks (5A: 5B) of the gear (1) and the cutting tool (2) and to generate locally and for a predetermined time a contact between the cutting tool (2) and the respective row of flanks (5A: 5B) of the gear (1).

4. Method according to any of the preceding claims, wherein the cutting tool (2) and the gear (1) are translated one in respect to the another along the rotation axis (Z1) of the gear (1).

5. Method according to any of the preceding claims, wherein the cutting tool (2) is translated longitudinally to the rotation axis (Z1) of the gear (1) and is rotated by a swivel angle (β) about the swivel axis (X2).

6. Method according to any of the preceding claims, wherein said method is realized after one or more different processes realized on board of the same machine (3); wherein said processes can comprise: the cutting of a disc made of metal and/or the finishing of a gear (1).

7. Method according to any of the preceding claims by means of a machine (3) comprising: a first and a second mandrel (8, 9); a first and a second actuator (10, 11) connected to said first and second mandrel (8, 9), respectively; and a control unit (12), which exchanges data with said first and second actuator (10, 11) to regulate their functioning; wherein the first and the second mandrel (8, 9) have a first and a second rotation axis (Z1, Y2) respectively; wherein the gear (1) is fitted around the first mandrel (8), which is coaxial to the first rotation axis (Z1); wherein the cutting tool (2) is fitted around the second mandrel (9), which is coaxial to the second rotation axis (Y2); wherein the control unit (12) synchronizes the rotation of the first and the second mandrel (8, 9) to mesh the cutting tool (2) with the gear (1); wherein the first and/or the second mandrel (8, 9) are rotatable mounted about a swivel axis (X1; X2) substantially perpendicular both to said first rotation axis (Z1) and to said second rotation axis (Y2); wherein the control unit (12) is configured to vary the relative position between the cutting tool (2) and the gear (1) to vary the radial distance (w).

8. Machine comprising a first and a second mandrel (8, 9), a first and a second actuator (10, 11) of said first and second mandrel (8, 9) respectively and a control unit (12), which exchanges data with said first and second actuator (10, 11), to regulate their functioning; wherein the first and the second mandrel (8, 9) have a first and a second rotation axis (Z1, Y2) respectively; wherein the gear (1) is fitted around and is coaxial to the first mandrel (8); wherein the cutting tool (2) is fitted around and is coaxial to the second mandrel (9); wherein the first and/or the second mandrel (8, 9) are rotatable mounted about a swivel axis (X1; X2) substantially perpendicular to said first and second rotation axis (Z1, Y2); wherein the control unit (12) is configured to synchronize the rotation of the first and the second mandrel (8, 9) to mesh the cutting tool (2) with the gear (1); wherein said control unit (12) is configured to regulate the rotation of the first and the second mandrel about said swivel axis (X1; X2); the machine (3) being **characterized in that** the control unit (12) is configured to implement the method according to any of the preceding claims.

**Patentansprüche**

1. Verfahren für die Leitwölbung der Flanken (5A: 5B) eines Zahnrads (1), das eine Rotationsachse (Z1) aufweist; wobei das Verfahren mittels eines Wälzfräswerkzeugs (2) realisiert wird, das eine Rotationsachse (Y2) aufweist; wobei das Verfahren die Schritte der Verzahnung des genannten Zahnrads (1) mit dem Wälzfräswerkzeug (2) und der synchronen Drehung des Schneidwerkzeugs (2) und des Zahnrads (1) umfasst, wobei das Schneidwerkzeug (2) und das Zahnrad (1) im Verhältnis zueinander um eine Schwenkachse (X1; X2) senkrecht sowohl zu der Rotationsachse (Y2) des Schneidwerkzeugs (2) als auch zu der Rotationsachse (Z1) des Zahnrads (1) drehen, um die Position der Kontaktlinie (D) zu variieren, **dadurch gekennzeichnet, dass** das Schneidwerkzeug (2) um die Schwenkachse (X2) gedreht wird und das Zahnrad (1) im Verhältnis zu der genannten Schwenkachse (X2) feststehend ist oder, alternativ, das Zahnrad (1) um die Schwenkachse (X1) gedreht und das Schneidwerkzeug (2) im Verhältnis zu der genannten Schwenkachse (X1) feststehend ist; wobei die Änderung des Schwenkwinkels (β), d. h. die Rotation des Schneidwerkzeugs (2) oder die Rotation des Zahnrads (1) um die Schwenkachse (X2) kontinuierlich erfolgt.

2. Verfahren nach Anspruch 1, wobei das Schneidwerkzeug (2) und das Zahnrad (1) im Verhältnis zueinander entlang der genannten Rotationsachse (Y2) des Schneidwerkzeugs (2) verschoben werden.

3. Verfahren nach Anspruch 1 oder 2, wobei die Rotationsgeschwindigkeit (ω1) des Zahnrads (1) um die Rotationsachse (Z1) und die Rotationsgeschwindigkeit (ω2) des Schneidwerkzeugs (2) um seine Rotationsachse (Y2) so eingestellt sind, dass die Position der Kontaktlinie (D) zwischen einer Reihe von Flanken (5A: 5B) des Zahnrads (1) und des Schneidwerkzeugs (2) variiert wird und lokal und über einen bestimmten Zeitraum ein Kontakt zwischen dem Schneidwerkzeug (2) und der jeweiligen Reihe Flanken (5A: 5B) des Zahnrads (1) herbeigeführt wird.

4. Verfahren nach einem beliebigen der vorangegangenen Ansprüche, wobei das Schneidwerkzeug (2) und das Zahnrad (1) im Verhältnis zueinander entlang der genannten Rotationsachse (Z1) des Zahnrads (1) verschoben werden.

5. Verfahren nach einem beliebigen der vorangegangenen Ansprüche, wobei das Schneidwerkzeug (2) in Längsrichtung zur Rotationsachse (Z1) des Zahnrads (1) verschoben und um einen Schwenkwinkel (β) um die Schwenkachse (X2) gedreht wird.

6. Verfahren nach einem beliebigen der vorangegangenen Ansprüche, wobei das genannte Verfahren nach einem oder mehreren auf derselben Maschine (3) ausgeführten unterschiedlichen Vorgängen realisiert wird; wobei die genannten Vorgänge Folgendes umfassen können: die spanabhebende Bearbeitung einer aus Metall hergestellten Scheibe und/oder die Endbearbeitung eines Zahnrads (1).

7. Verfahren nach einem beliebigen der vorangegangenen Ansprüche mittels einer Maschine (3), die Folgendes umfasst: einen ersten und einen zweiten Dorn (8, 9); einen jeweils an den genannten ersten und zweiten Dorn (8, 9) angeschlossenen ersten und zweiten Stellantrieb (10, 11); und ein Steuergerät (12), das Daten mit dem genannten ersten und zweiten Stellantrieb (10, 11) austauscht, um ihre Funktionsweise zu regulieren; wobei der erste und der zweite Dorn (8, 9) jeweils eine erste und eine zweite Rotationsachse (Z1, Y2) aufweisen; wobei das Zahnrad (1) auf den ersten Dorn (8) gespannt ist, der koaxial zu der ersten Rotationsachse (Z1) ist; wobei das Schneidwerkzeug (2) auf den zweiten Dorn (9) gespannt ist, der koaxial zu der zweiten Rotationsachse (Y2) ist; wobei das Steuergerät (12) die Rotation des ersten und des zweiten Dorns (8, 9) synchronisiert, um das Schneidwerkzeug (2) mit dem Zahnrad (1) in Eingriff zu bringen; wobei der erste und/oder der zweite Dorn (8, 9) drehbar um eine Schwenkachse (X1; X2) im Wesentlichen senkrecht sowohl zu der genannten ersten Rotationsachse (Z1) als auch zu der genannten zweiten Rotationsachse (Y2) montiert sind; wobei das Steuergerät (12) darauf ausgelegt ist, die relative Position zwischen dem Schneidwerkzeug (2) und dem Zahnrad (1) zu variieren, um den radialen Abstand (w) zu variieren.

8. Maschine, umfassend einen ersten und einen zweiten Dorn (8, 9), einen ersten und einen zweiten Stellantrieb (10, 11) jeweils des genannten ersten und zweiten Dorns (8, 9) und ein Steuergerät (12), das Daten mit dem genannten ersten und zweiten Stellantrieb (10, 11) austauscht, um ihre Funktionsweise zu regulieren; wobei der erste und der zweite Dorn (8, 9) jeweils eine erste und eine zweite Rotationsachse (Z1, Y2) aufweisen; wobei das Zahnrad (1) auf den ersten Dorn (8) gespannt und zu diesem koaxial ist; wobei das Schneidwerkzeug (2) auf den zweiten Dorn (9) gespannt und zu diesem koaxial ist; wobei der erste und/oder der zweite Dorn (8, 9) drehbar um eine Schwenkachse (X1; X2) im Wesentlichen senkrecht zu der genannten ersten und zweiten Rotationsachse (Z1, Y2) montiert sind; wobei das Steuergerät (12) darauf ausgelegt ist, die Rotation des ersten und des zweiten Dorns (8, 9) zu synchronisieren, um das Schneidwerkzeug (2) mit dem Zahnrad (1) in Eingriff zu bringen; wobei das genannte Steuergerät (12) darauf ausgelegt ist, die Rotation des ersten und des zweiten Dorns um die genannte Schwenkachse (X1; X2) einzustellen; wobei die Maschine (3) **dadurch gekennzeichnet ist, dass** das Steuergerät (12) darauf ausgelegt ist, das Verfahren nach einem beliebigen der vorangegangenen Ansprüche zu implementieren.

**Revendications**

1. Procédé pour la mise en couronne des flancs (5A: 5B) d'un engrenage (1) ayant un axe de rotation (Z1) ; le procédé étant réalisé au moyen d'un outil de coupe de génération (2) ayant un axe de rotation (Y2) ; le procédé comprenant les étapes consistant à engrener ledit engrenage (1) avec l'outil de coupe de génération (2) et à entraîner en rotation synchrone l'outil de coupe (2) et l'engrenage (1), dans lequel l'outil de coupe (2) et l'engrenage (1) pivotent l'un par rapport à l'autre autour d'un axe de pivotement (X1; X2) perpendiculaire à la fois à l'axe de rotation (Y2) de l'outil de coupe (2) et à l'axe de rotation (Z1) de l'engrenage (1) pour faire varier la position de la ligne de contact (D), **caractérisé en ce que** l'outil de coupe (2) est entraîné en rotation autour de l'axe de pivotement (X2) et l'engrenage (1) est fixé par rapport audit axe de pivotement (X2) ou, alternativement, l'engrenage (1) est entraîné en rotation autour de l'axe de pivotement (X1) et l'outil de coupe (2) est fixé par rapport audit axe de pivotement (X1) ; dans lequel la variation de l'angle de pivotement (β), notamment la rotation de l'outil de coupe (2) ou la rotation de l'engrenage (1) autour l'axe de pivotement (X2), est continue.

2. Procédé selon la revendication 1, dans lequel l'outil de coupe (2) et l'engrenage (1) sont entraînés en translation l'un par rapport à l'autre le long dudit axe de rotation (Y2) de l'outil de coupe (2).

3. Procédé selon la revendication 1 ou 2, dans lequel la vitesse de rotation (ω1) de l'engrenage (1) autour de l'axe de rotation (Z1) et la vitesse de rotation (ω2) de l'outil de coupe (2) autour de son axe de rotation (Y2) sont réglées pour faire varier la position de la ligne de contact (D) entre une rangée de flancs (5A: 5B) de l'engrenage (1) et l'outil de coupe (2) et pour générer localement et pendant une période de temps prédéterminée un contact entre l'outil de coupe (2) et la rangée de flancs respective (5A: 5B) de l'engrenage (1).

4. Procédé selon l'une quelconque des revendications précédentes, dans lequel l'outil de coupe (2) et l'engrenage (1) sont entraînés en translation l'un par rapport à l'autre le long de l'axe de rotation (Z1) de l'engrenage (1).

5. Procédé selon l'une quelconque des revendications précédentes, dans lequel l'outil de coupe (2) est entraîné en translation de façon longitudinale à l'axe de rotation (Z1) de l'engrenage (1) et est entraîné en rotation selon un angle de pivotement (β) autour de l'axe de pivotement (X2).

6. Procédé selon l'une quelconque des revendications précédentes, dans lequel ledit procédé est réalisé après un ou plusieurs processus différents réalisés à bord de la même machine (3) ; dans lequel lesdits processus peuvent comprendre : la découpe d'un disque métallique et/ou la finition d'un engrenage (1).

7. Procédé selon l'une quelconque des revendications précédentes au moyen d'une machine (3) comprenant : un premier et un deuxième mandrins (8, 9) ; un premier et un deuxième actionneurs (10, 11) reliés auxdits premier et deuxième mandrins (8, 9), respectivement ; et une unité de commande (12), qui échange des données avec lesdits premier et deuxième actionneurs (10, 11) pour régler leur fonctionnement ; dans lequel les premier et deuxième mandrins (8, 9) ont un premier et un deuxième axes de rotation (Z1, Y2) respectivement ; dans lequel l'engrenage (1) est adapté autour du premier mandrin (8), qui est coaxial au premier axe de rotation (Z1) ; dans lequel l'outil de coupe (2) est adapté autour du deuxième mandrin (9), qui est coaxial au deuxième axe de rotation (Y2) ; dans lequel l'unité de commande (12) synchronise la rotation du premier et du deuxième mandrins (8, 9) pour engrener l'outil de coupe (2) avec l'engrenage (1) ; dans lequel le premier et/ou le deuxième mandrin (8, 9) sont montés de manière rotative autour d'un axe de pivotement (X1; X2) sensiblement perpendiculaire à la fois audit premier axe de rotation (Z1) et audit deuxième axe de rotation (Y2) ; dans lequel l'unité de commande (12) est configurée pour faire varier la position relative entre l'outil de coupe (2) et l'engrenage (1) pour faire varier la distance radiale (w).

8. Machine comprenant un premier et un deuxième mandrins (8, 9), un premier et un deuxième actionneurs (10, 11) desdits premier et deuxième mandrins (8, 9) respectivement et une unité de commande (12), qui échange des données avec lesdits premier et deuxième actionneurs (10, 11), pour régler leur fonctionnement ; dans laquelle le premier et le deuxième mandrins (8, 9) ont un premier et un deuxième axe de rotation (Z1, Y2) respectivement ; dans laquelle l'engrenage (1) est adapté autour et est coaxial au premier mandrin (8) ; dans laquelle l'outil de coupe (2) est adapté autour et est coaxial au deuxième mandrin (9) ; dans laquelle le premier et/ou le deuxième mandrin (8, 9) sont montés de manière rotative autour d'un axe de pivotement (X1; X2) sensiblement perpendiculaire auxdits premier et deuxième axes de rotation (Z1, Y2) ; dans laquelle l'unité de commande (12) est configurée pour synchroniser la rotation du premier et du deuxième mandrins (8, 9) pour engrener l'outil de coupe (2) avec l'engrenage (1) ; dans laquelle ladite unité de commande (12) est configurée pour régler la rotation du premier et du deuxième mandrin autour dudit axe de pivotement (X1; X2) ; la machine (3) étant **caractérisée en ce que** l'unité de commande (12) est configurée pour mettre en œuvre le procédé selon l'une quelconque des revendications précédentes.

FIG.1

FIG.2

FIG.3

FIG.4

FIG.5

FIG.6

FIG.7

FIG.8

FIG.9A

FIG.9B

FIG.10

**EP 3 887 083 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013280990 A
- CH 440915
- DE 4231021